# EUROPÄISCHE PATENTANMELDUNG

(11) **EP 0 713 801 A2**
(43) Veröffentlichungstag der Anmeldung: **29.05.1996**
(21) Anmeldenummer: 95115507.6
(22) Anmeldetag: 30.09.1995
(51) Int. Cl.: B60Q 1/068

(54) **Scheinwerfer für Fahrzeuge**

(30) Priorität: 27.10.1994 DE 4438329
(71) Anmelder: ROBERT BOSCH GMBH, 70442 Stuttgart (DE)
(72) Erfinder: Bertling, Johannes, Dr. Dipl.-Ing., D-71665 Vaihingen (DE); Daumueller, Hans, D-72411 Bodelshausen (DE); Dobler, Karl-Otto, D-72768 Reutlingen (DE); Mueller, Juergen, Dipl.-Ing. (FH), D-72461 Albstadt (DE); Streit, Lothar, Dipl.-Ing. (FH), D-72820 Sonnenbuehl (DE); Vent, Albert, Dipl.-Ing., D-72800 Eningen (DE)

(57) **Zusammenfassung**

Der Scheinwerfer weist einen Scheinwerfereinsatz (10) auf, der in einem Abschnitt (26) einer Aufnahme (12) an seinem vorderen Randbereich (22) schwenkbar gelagert ist und an dem mit Abstand von dessen Lagerstelle eine Verstellvorrichtung angreift. Der Aufnahmeabschnitt (26) umgibt den Scheinwerfereinsatz (10) auf dessen Umfang und zwischen dem Scheinwerfereinsatz (10) und dem Aufnahmeabschnitt (26) ist ein elastisch verformbares Element (29) in Form eines Rings eingespannt. Über den Ring (29) ist der Scheinwerfereinsatz (10) spielfrei im Aufnahmeabschnitt (26) schwenkbar gelagert. Durch den Ring (29) werden bei einer Schwenkbewegung des Scheinwerfereinsatzes (10) zwischen diesem und dem Aufnahmeabschnitt (26) auftretende Abstandsänderungen ausgeglichen und dieser stellt zusammen mit dem Aufnahmeabschnitt (26) eine sehr einfache Lagerung für den Scheinwerfereinsatz (10) dar.

## Beschreibung

### Stand der Technik

Die Erfindung geht aus von einem Scheinwerfer für Fahrzeuge nach der Gattung des Anspruchs 1.

Ein solcher Scheinwerfer ist durch die DE-GM 87 13 631 bekannt. Dieser Scheinwerfer weist einen Scheinwerfereinsatz auf, der einen Reflektor und eine an diesem befestigte Abdeckscheibe umfaßt. Der Scheinwerfereinsatz ist an einer Aufnahme in Form eines Tragrahmens schwenkbar gehalten. Der Scheinwerfereinsatz ist nach Art einer Dreipunktlagerung am Tragrahmen gelagert und ist zu einer Einstellung der Ausrichtung seiner optischen Achse im einer vertikalen Längsebene schwenkbar und zu einer Einstellung der Ausrichtung seiner optischen Achse in einer horizontalen Langsebene schwenkbar. Jeweils mit Abstand zu den Lagerstellen greift am Scheinwerfereinsatz eine Verstellvorrichtung für dessen Einstellung in der vertikalen Langsebene und eine Verstellvorrichtung für dessen Einstellung in der horizontalen Längsebene an. Die Lagerstellen des Scheinwerfereinsatzes sind durch Kugelzapfen und Kugelgelenklager gebildet, von denen jeweils drei Stück erforderlich sind. Dieser Scheinwerfer erfordert daher viele Bauteile, was zu hohen Fertigungskosten und zu einer aufwendigen Montage führt, jedoch bei einer Großserienfertigung vermieden werden sollte.

### Vorteile der Erfindung

Der erfindungsgemäße Scheinwerfer mit den Merkmalen gemäß dem Anspruch 1 hat demgegenüber den Vorteil, daß die schwenkbare Lagerung des Scheinwerfereinsatzes auf sehr einfache Weise und mit wenigen Bauteilen erreicht ist.

In den abhängigen Ansprüchen sind vorteilhafte Ausgestaltungen und Weiterbildungen der Erfindung angegeben. Die Ausbildung des elastisch verformbaren Elements als Ring wie im Anspruch 3 angegeben, ermöglicht es, dieses zugleich zur Abdichtung zwischen der Aufnahme und dem Scheinwerfereinsatz zu verwenden. Durch die Ausbildung gemäß Anspruch 7 ist sichergestellt, daß der Scheinwerfereinsatz bei der Einstellung der Ausrichtung der optischen Achse nicht um die optische Achse verdreht werden kann.

### Zeichnung

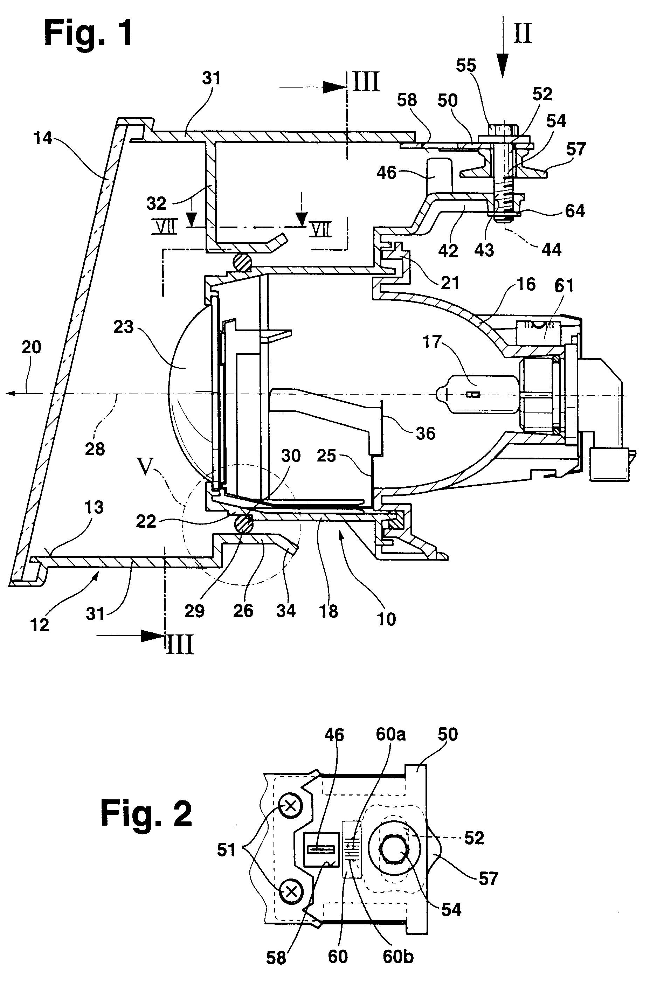

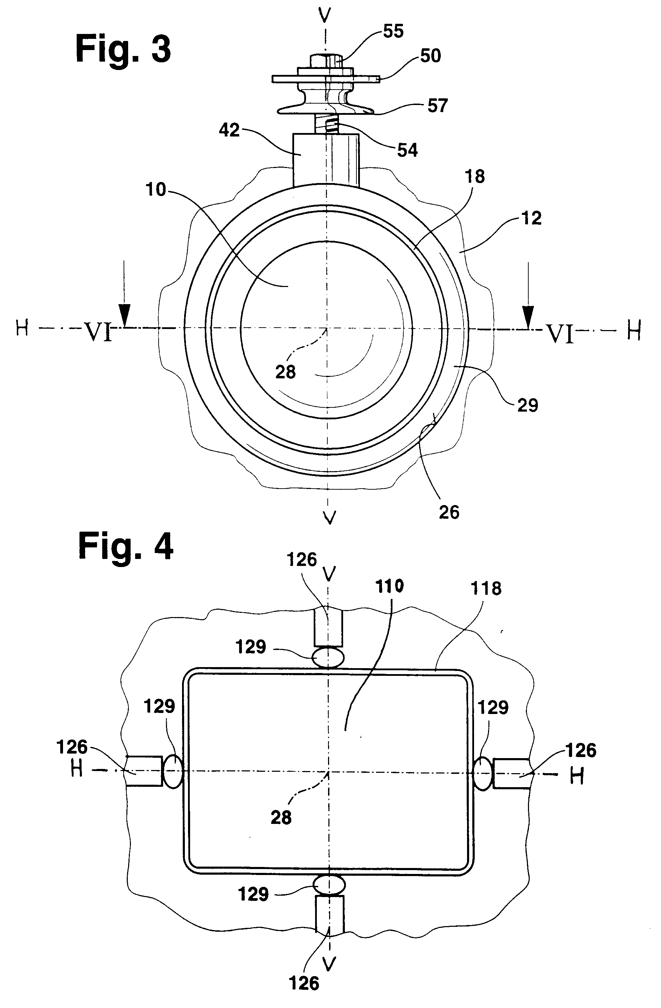

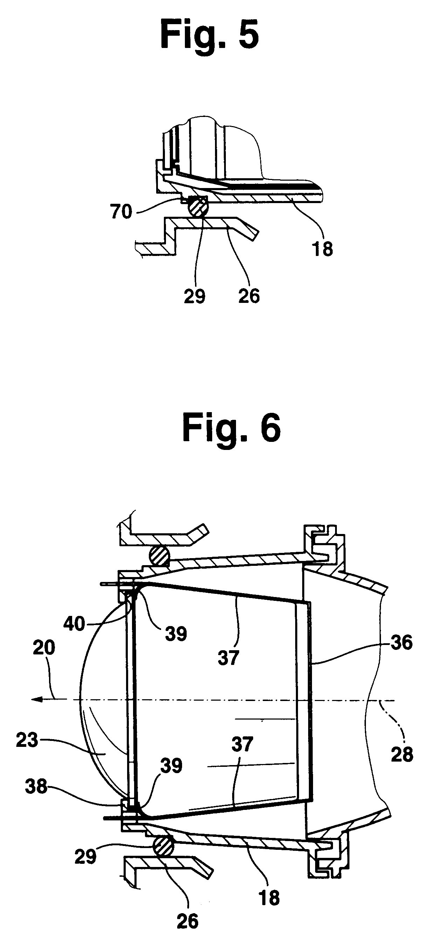

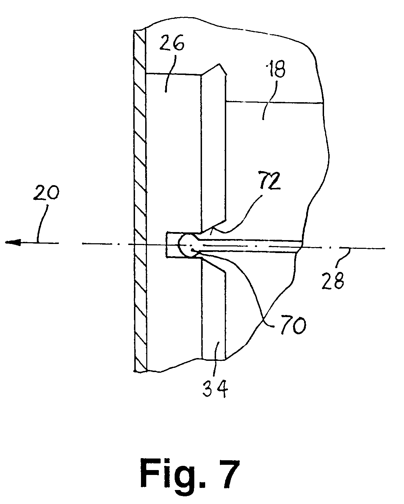

Ein Ausführungsbeispiel der Erfindung ist in der Zeichnung dargestellt und in der nachfolgenden Beschreibung näher erläutert. Es zeigen Figur 1 einen Scheinwerfer für Fahrzeuge mit einer Aufnahme und Verstellvorrichtung für diesen in einem vertikalen Längsschnitt, Figur 2 den Scheinwerfer abschnittsweise in einer Ansicht in Pfeilrichtung II in Figur 1, Figur 3 den Scheinwerfer in einem Querschnitt entlang Linie III-III in Figur 1, Figur 4 eine modifizierte Ausführung des Scheinwerfers im Querschnitt, Figur 5 den in Figur 1 mit V bezeichneten Ausschnitt des Scheinwerfers mit einer modifizierten Ausführung einer Anordnung eines elastisch verformbaren Elements, Figur 6 den Scheinwerfer ausschnittsweise in einem horizontalen Längsschnitt entlang Linie VI-VI in Figur 3 und Figur 7 den Scheinwerfer ausschnittsweise in einem Schnitt entlang Linie VII-VII in Figur 1.

### Beschreibung des Ausführungsbeispiels

Ein in den Figuren 1 bis 7 dargestellter Scheinwerfer für Fahrzeuge, insbesondere Kraftfahrzeuge, weist einen Scheinwerfereinsatz 10 auf, der in einer Aufnahme 12 angeordnet ist. Die Aufnahme 12 ist ein Teil der Karosserie des Fahrzeugs, kann jedoch auch ein mit der Karosserie verbundener Tragrahmen oder ein mit der Karosserie verbundenes Gehäuse sein. Die Aufnahme 12 weist eine Lichtaustrittsöffnung 13 auf, die mit einer lichtdurchlässigen Abdeckscheibe 14 verschlossen ist. Die Abdeckscheibe 14 kann als glatte Scheibe ausgebildet sein oder mit optisch wirksamen Elementen versehen sein. Der Scheinwerfereinsatz 10 besteht aus einem Reflektor 16, einer in diesen eingesetzten Lichtquelle 17, einem rohrartigen Trägerteil 18, das mit dem in Lichtaustrittsrichtung 20 weisenden Vorderrand 21 des Reflektors 16 verbunden ist, einer am in Lichtaustrittsrichtung 20 weisenden Vorderrand 22 des Trägerteils 18 angeordneten Linse 23 und einer innerhalb des Trägerteils 18 im Bereich des Vorderrands 21 des Reflektors 16 angeordneten Blende 25. Der vorstehend beschriebene Scheinwerfereinsatz 10 bildet ein sogenanntes Projektionssystem. Der Scheinwerfereinsatz kann jedoch auch als Reflexionssystem ausgebildet sein und besteht dann nur aus dem Reflektor, an dessen Vorderrand gegebenenfalls eine Abdeckscheibe befestigt ist, der in den Reflektor eingesetzten Lichtquelle und gegebenenfalls einem den Reflektor aufnehmenden Tragrahmen.

Der Scheinwerfereinsatz 10 ist in seinem in Lichtaustrittsrichtung 20 weisenden vorderen Bereich, das heißt im Bereich des Vorderrands 22 des Trägerteils 18 in der Aufnahme 12 zumindest in einer in Figur 3 markierten vertikalen Längsebene VV schwenkbar gelagert. Ist der Scheinwerfereinsatz als Reflexionssystem ausgebildet, so ist er im Bereich des Vorderrands des Reflektors schwenkbar gelagert. Vorzugsweise ist der Scheinwerfereinsatz 10 räumlich schwenkbar gelagert, das heißt zusätzlich auch in einer in Figur 3 markierten horizontalen Längsebene HH schwenkbar. Das Trägerteil 18 ist zumindest im Bereich seines Vorderrands 22 in einem Abschnitt 26 der Aufnahme 12 angeordnet und von diesem zumindest auf einem Teil seines Umfangs umgeben.

Der Aufnahmeabschnitt 26 ist entgegen Lichtaustrittsrichtung 20 von der Lichtaustrittsöffnung 13 der Aufnahme 12 entfernt angeordnet und ist im Querschnitt senkrecht zur optischen Achse 28 kleiner ausgebildet als die Lichtaustrittsöffnung 13. Der Aufnahmeabschnitt 26 ist einstückig mit der Aufnahme 12 ausgebildet und über Wände 31 mit dem die Lichtaustrittsöffnung 13 umgebenden Vorderrand der Aufnahme 12 verbunden. Der Aufnahmeabschnitt 28 ist in Einbaulage des Scheinwerfers im Fahrzeug zum unteren Rand der Aufnahme 12 hin versetzt angeordnet, wobei oberhalb des Aufnahmeabschnitts 28 eine sich etwa vertikal erstreckende Wandung 32 der Aufnahme 12 ausgebildet ist, durch die der hinter dieser liegende Bereich verdeckt wird, so daß dieser von außerhalb des Scheinwerfers nicht einsehbar ist. Der Aufnahmeabschnitt 26 ist etwa hohlzylinderförmig ausgebildet und weist mit seinem freien Ende 34 entgegen Lichtaustrittsrichtung 20. Das freie Ende 34 des Aufnahmeabschnitts 28 erweitert sich entgegen Lichtaustrittsrichtung 20, wobei die Erweiterung beispielsweise konisch erfolgen kann.

Bei einer ersten Ausführungsform des Scheinwerfers sind Scheinwerfereinsatz 10 und das Trägerteil 18, wie in Figur 3 dargestellt, im Querschnitt etwa senkrecht zur optischen Achse 28 gerundet ausgebildet, beispielsweise kreisförmig oder oval, und der Aufnahmeabschnitt 26 ist in seinem freien Querschnitt etwa senkrecht zur optischen Achse 28 des Scheinwerfereinsatzes 10 an die Querschnittform des Trägerteils 18 angepaßt ebenfalls gerundet ausgebildet. Auf dem Trägerteil 18 ist im Bereich seines Vorderrands 22 ein elastisch verformbares Element 29 angeordnet, das als ein das Trägerteil 18 auf dessen gesamtem Umfang umgebender Ring ausgebildet ist. Der Innendurchmesser des Rings 29 in nicht montiertem Zustand ist etwas kleiner als der Außendurchmesser des Trägerteils 18 an seinem Vorderrand 22, so daß der Ring 29 unter Spannung auf dem Trägerteil 18 angeordnet ist. Der Vorderrand 22 des Trägerteils 18 weist in Lichtaustrittsrichtung 20 einen Bereich mit verringertem Außenquerschnitt auf, so daß am Umfang des Trägerteils 18 eine in Lichtaustrittsrichtung 20 weisende Stufe 30 gebildet ist. Der Ring 29 ist auf dem Bereich mit dem kleineren Außenquerschnitt angeordnet und stützt sich entgegen Lichtaustrittsrichtung 20 an der Stufe 30 ab. Zu seinem Ende hin kann das Trägerteil 18 einen weiter verringerten Außenquerschnitt aufweisen, um ein leichtes Aufbringen des Rings 29 zu ermöglichen. Der Innenquerschnitt des Aufnahmeabschnitts 26 ist etwas kleiner als der Außenquerschnitt des auf dem Trägerteil 18 angeordneten Rings 29, so daß der Ring 29 bei im Aufnahmeabschnitt 26 angeordnetem Trägerteil 18 unter elastischer Verformung etwas zusammengedrückt wird, wodurch eine spielfreie schwenkbare Lagerung des Trägerteils 18 im Aufnahmeabschnitt 26 erreicht wird. Bei einer Schwenkbewegung des Trägerteils 18 werden die dabei auftretenden Abstandsänderungen zwischen dem Trägerteil 18 und dem Aufnahmeabschnitt 26 durch eine elastische Verformung des Rings 29 ausgeglichen.

Der Ring 29 dient neben der Lagerung des Tragerteils 18 zugleich als Dichtelement, das ein Eindringen von Schmutz und Feuchtigkeit in den Bereich der Aufnahme 12 verhindert, in dem der Scheinwerfereinsatz 10 angeordnet ist.

Der Scheinwerfereinsatz 10 ist im Aufnahmeabschnitt 26 gegen Verdrehen um die optische Achse 28 gesichert. Die Verdrehsicherung wird wie in Figur 7 dargestellt durch einen vom Trägerteil 18 nach oben abstehenden Vorsprung 70 erreicht, der in eine sich etwa parallel zur optischen Achse 28 erstreckende Ausnehmung 72 im freien Ende 34 des Aufnahmeabschnitts 26 mit geringem Spiel in tangentialer Richtung bezüglich der optischen Achse 28 eingreift. Der Vorsprung 70 ist in der Ausnehmung 72 in Richtung der optischen Achse 28 verschiebbar, um ein Schwenken des Scheinwerfereinsatzes 10 zur Einstellung der Ausrichtung der optischen Achse 28 in der vertikalen Längsebene VV nicht zu behindern. Das in der Ausnehmung 72 angeordnete Ende des Vorsprungs 70 ist kugelförmig ausgebildet und die Ausnehmung 72 erweitert sich in ihrem Randbereich entgegen Lichtaustrittsrichtung 20, damit der Scheinwerfereinsatz 10 zur Einstellung der Ausrichtung der optischen Achse 28 in der horizontalen Längsebene HH geschwenkt werden kann. Die Anordnung des Vorsprungs 70 und der Ausnehmung 72 kann auch umgekehrt sein, so daß der Vorsprung am Aufnahmeabschnitt und die Ausnehmung am Trägerteil angeordnet ist. Schließlich können der Vorsprung 70 und die Ausnehmung 72 an beliebigen Stellen am Umfang des Aufnahmeabschnitts 26 und des Trägerteils 18 angeordnet sein.

Bei einer in Figur 5 dargestellten modifizierten Ausführungsform des Scheinwerfers weist das Trägerteil 18 im Bereich des Vorderrands 22 in seinem Außenumfang eine umlaufende Ringnut 70 auf, in die der Ring 29 teilweise eintaucht, jedoch mit seinem Außenrand in radialer Richtung über das Trägerteil 18 hinausragt. Das Trägerteil 18 ist auch bei dieser Ausführungsform über den Ring 29 spielfrei im Aufnahmeabschnitt 26 schwenkbar gelagert.

In Figur 4 ist eine modifizierte Ausführungsform des Scheinwerfers dargestellt, bei der mehrere elastisch verformbare Elemente 129 über den Umfang des Trägerteils 118 verteilt angeordnet sind. Der Aufnahmeabschnitt ist durch mehrere über den Umfang des Trägerteils 118 verteilt angeordnete Stützen 126 gebildet, die etwa radial zum Trägerteil 118 gerichtet sind. Die elastisch verformbaren Elemente 129 sind zwischen dem Außenumfang des Trägerteils 18 und jeweils einer Stütze 126 eingespannt. Die elastisch verformbaren Elemente 129 können fest mit dem Trägerteil 118 oder mit den Stützen 126 verbunden sein. Die Stützen 126 weisen in Richtung der optischen Achse 28 des Scheinwerfereinsatzes 110 gesehen ein solche Erstreckung auf, daß die elastisch verformbaren Elemente 129 auch in geschwenkten Stellungen des Trägerteils 118 noch an den Stützen 126 anliegen. Der Scheinwerfereinsatz 110 und das Trägerteil 118 sind bei dieser Ausführungsform des Scheinwerfers im Querschnitt etwa senkrecht zur optischen Achse 28 rechteckförmig ausgebildet, wobei jeweils eine untere und obere Rechteckseite etwa horizontal angeordnet ist und die beiden seitlichen Rechteckseiten etwa vertikal angeordnet sind. Die vorstehend beschriebene Ausführung der elastisch verformbaren Elemente 129 und des Aufnahmeabschnitts mit den Stützen 126 kann auch bei beliebigen anderen Querschnittsformen des Scheinwerfereinsatzes 110 bzw. des Trägerteils 118 verwendet werden. Der Scheinwerfereinsatz 110 ist wie bei der Ausführung gemäß Figur 1 und Figur 7 im Aufnahmeabschnitt 126 gegen Verdrehen um die optische Achse 28 gesichert.

Das Trägerteil 18 des Scheinwerfereinsatzes 10 ist fest mit dem Vorderrand 21 des Reflektors 16 verbunden, beispielsweise verklebt oder mittels einer Rastverbindung. Die Blende 25 ist im Trägerteil 18 befestigt und deren eigentlicher Blendenabschnitt 36 ist, wie in Figur 1 dargestellt, etwa in der Ebene des Vorderrands 21 des Reflektors 16 angeordnet. Der Blendenabschnitt 36 erstreckt sich senkrecht zur optischen Achse 28 und im wesentlichen unterhalb von dieser und bildet im Betrieb des Scheinwerfers eine obere Helldunkelgrenze des aus dem Scheinwerfer austretenden Lichtbündels. Die Blende 25 weist außerdem wie in Figur 6 dargestellt zwei vom Blendenabschnitt 36 in Lichtaustrittsrichtung 20 abstehende Arme 37 auf, deren Enden durch jeweils eine Öffnung in der die Linse 23 umgebenden vorderen Stirnwand 38 des Trägerteils 18 hindurchragen. Innerhalb des Trägerteils 18 ist vor der Linse 23 an jedem Arm 37 jeweils ein Haken 39 radial nach innen über den Rand der Linse 23 umgebogen, durch die die Linse 23 in der Anlage an einer Stufe 40 an der Stirnwand 38 des Trägerteils 18 gehalten wird.

Im Bereich des Vorderrands 21 des Reflektors 16 steht vom Trägerteil 18 in Einbaulage des Scheinwerfers am Fahrzeug nach oben ein Arm 42 ab, der sich mit Abstand zum Reflektor 16 entgegen Lichtaustrittsrichtung 20 erstreckt und im Bereich seines freien Endes eine Gewindebohrung 43 aufweist, deren Achse 44 zumindest annähernd senkrecht zur optischen Achse 28 und in vertikaler Richtung verläuft. Die Achse 44 der Gewindebohrung 43 liegt in der die optische Achse 28 enthaltenden vertikalen Längsebene VV des Scheinwerfereinsatzes 10. Das Trägerteil 18 besteht vorzugsweise aus Kunststoff, wobei der Arm 42 einstückig mit diesem ausgebildet ist. Das Trägerteil 18 kann jedoch auch aus Blech bestehen und der Arm 42 kann als separates Teil ausgebildet sein, das mit dem Trägerteil 18 verbunden ist. Der Arm 42 kann außerdem gegebenenfalls eine nach oben von diesem abstehende Nase 46 aufweisen, deren Funktion nachstehend noch erläutert wird.

Die obere Wand 31 der Aufnahme 12 erstreckt sich entgegen Lichtaustrittsrichtung 20 über den Scheinwerfereinsatz 10 hinweg bis nahe zum freien Ende des Arms 42 des Trägerteils 18. Mit der Wand 31 ist ein plattenförmiges Teil 50 fest verbunden, das somit einen Teil der Aufnahme 12 bildet und eine Verlängerung der Wand 31 darstellt. Die Platte 50 ist oberhalb des Arms 42 des Trägerteils 18 angeordnet und erstreckt sich in horizontaler Richtung betrachtet nur über einen Teil der Breite der Wand 31 im Bereich des Arms 42. Die Platte 50 ist an der Wand 31 beispielsweise mittels einer oder mehrerer Schrauben 51 befestigt und erstreckt sich zumindest annähernd senkrecht zur optischen Achse 28 und horizontal. Die Platte 50 kann beispielsweise aus Kunststoff bestehen und weist eine Öffnung 52 auf, die vorzugsweise als Langloch ausgebildet ist, dessen Längserstreckung in horizontaler Richtung und zumindest annähernd senkrecht zur optischen Achse 28 verläuft.

Durch das Langloch 52 ist von der Oberseite des Scheinwerfers her, das heißt in Pfeilrichtung III in Figur 1 deren Ansicht in Figur 2 dargestellt ist, eine Verstellschraube 54 gesteckt, die sich mit ihrem Kopf 55 an der Oberseite der Platte 50 am Rand neben dem Langloch 52 abstützt und deren mit der Längsachse 44 der Gewindebohrung 43 identische Längsachse zumindest annähernd vertikal und senkrecht zur optischen Achse 28 verläuft. Die Verstellschraube 54 ist in die Gewindebohrung 43 des Arms 42 eingeschraubt, wobei auf die Verstellschraube 54 im Bereich zwischen dem Arm 42 und der Platte 50 ein Mutterteil 57 aufgeschraübt ist, das auf der Verstellschraübe 54 drehbar ist. Das Ende der Verstellschraube 54 ragt auf der Unterseite aus dem Arm 42 heraus und weist durch eine Ringnut auf, in die ein Sicherungsring 64 eingespannt ist. Das Mutterteil 57 weist einen solchen Durchmesser auf, daß an diesem zu dessen Verdrehung von der Oberseite oder von der Rückseite des Scheinwerfers von schräg oben her unterhalb der Platte 50 angegriffen werden kann.

Die Platte 50 kann auch einstückig mit der oberen Wand 31 der Aufnahme 12 ausgebildet sein, wobei dann das Langloch 52 direkt im Endbereich der Wand 31 ausgebildet ist. Die Verstellschraube 54 bildet zusammen mit dem Mutterteil 57 eine Verstellvorrichtung, die am Scheinwerfereinsatz 10 entgegen Lichtaustrittsrichtung 20 von dessen schwenkbar gelagertem vorderem Randbereich 22 entfernt angreift.

Die Platte 50 kann außerdem gegebenenfalls eine weitere Öffnung 58 aufweisen, durch die die Nase 46 des Arms 42 hindurchragt oder zumindest von der Oberseite des Scheinwerfers her in Pfeilrichtung III in Figur 1 betrachtet, wie in Figur 3 dargestellt, sichtbar ist. Die weitere Öffnung 58 ist wie das Langloch 52 langgestreckt ausgebildet und verläuft mit seiner Längserstreckung etwa parallel zu der des Langlochs 52. Entlang der Längserstreckung der Öffnung 58 ist an deren Rand eine Skala 60 angeordnet, mit der die Nase 46 als Markierung zusammenwirkt.

Nachfolgend wird die Montage des Scheinwerfers und die Einstellung des Scheinwerfereinsatzes 10 erläutert. Der Scheinwerfereinsatz 10 wird als Einheit komplett vormontiert und auf den Vorderrand 22 des Trägerteils 18 wird der Ring 29 aufgeschoben. Der Scheinwerfereinsatz 10 wird von der Rückseite der Aufnahme 12 her in Lichtaustrittsrichtung 20 in den Aufnahmeabschnitt 26 eingeschoben, was durch die Erweiterung des freien Endbereichs des Aufnahmeabschnitts 26 einfach möglich ist. Der Vorsprung 70 wird dabei in die Ausnehmung 72 eingeführt. Die Verstellschraube 54 wird durch das Langloch 52 in der Platte 50 von oben her hindurchgesteckt und von unten her wird das Mutterteil 57 auf die Verstellschraube 54 aufgeschraubt. Anschließend wird die Verstellschraube 54 in die Gewindebohrung 43 im Arm 42 des Trägerteils 18 eingeschraubt und der Sicherungsring 64 wird in die Ringnut eingefügt. Wird das Mutterteil 57 auf der Verstellschraube 54 so weit nach oben geschraubt, daß es an der Unterseite der Platte 50 zur Anlage kommt und fest angezogen, so wird die Verstellschraube 54 an der Platte 50 fixiert, so daß sie weder in Richtung ihrer Längsachse 44 verschiebbar noch um ihre Längsachse 44 verdrehbar ist. In diesem Fall ist der Scheinwerfereinsatz 10 in der Aufnahme 12 fixiert.

Für eine Einstellung des Scheinwerfereinsatzes 10, das heißt der Ausrichtung von dessen optischer Achse 28, wird das Mutterteil 57 gelöst. Für eine Einstellung der Ausrichtung der optischen Achse 28 in der vertikalen Längsebene, das heißt der Neigung der optischen Achse 28, wird bei gelöstem Mutterteil 57 die Verstellschraube 54 verdreht, wodurch je nach Drehrichtung der Scheinwerfereinsatz 10 im Bereich seines Arms 42 durch die Gewindeverbindung mit der Verstellschraube 54 vertikal nach oben oder nach unten bewegt. Die Verstellschraube 54 befindet sich dabei mit ihrem Kopf 55 durch das Gewicht des Scheinwerfereinsatzes 10 bewirkt in der Anlage an der Oberseite der Platte 50. Durch den Sicherungsring 64 ist sichergestellt, daß die Verstellschraube 54 nicht ganz aus der Gewindebohrung 43 des Arms 42 herausgedreht werden kann.

Der Scheinwerfereinsatz 10 führt bei einer Verdrehung der Verstellschraube 54 eine Schwenkbewegung um seinen im Aufnahmeabschnitt 26 über das elastische Element 29 spielfrei gelagerten vorderen Randbereich aus, so daß die Neigung der optischen Achse 28 in der vertikalen Längsebene VV verstellt wird. Der Vorsprung 70 wird dabei in der Ausnehmung 72 verschoben. Das elastische Element 29 kann dabei bei der Schwenkbewegung des Scheinwerfereinsatzes 10 auftretende Abstandsänderungen zwischen dem Vorderrand 22 des Trägerteils 18 und dem Aufnahmeabschnitt 26 ausgleichen. Ist die Neigung der optischen Achse 28 korrekt eingestellt, so wird das Mutterteil 57 wieder an der Platte 50 fest angezogen, so daß der Scheinwerfereinsatz 10 fixiert ist. Verläuft die Verstellschraube 54 bei korrekt eingestellter Ausrichtung der optischen Achse 28 in der vertikalen Längsebene VV nicht senkrecht zur Platte 50, kann die Platte 50 unter geringer elastischer Verformung sich an diese Schrägstellung anpassen, so daß denoch eine flächige Anlage des Kopfes 55 der Verstellschraube 54 und des Mutterteils 57 an der Platte 50 und damit eine sichere Fixierung der Verstellschraube 54 ermöglicht ist. Für eine Kontrolle der Einstellung der Neigung der optischen Achse 28 kann mit dem Scheinwerfereinsatz in bekannter Weise eine Wasserwaage 61 verbunden sein, die von außerhalb der Aufnahme 12 sichtbar ist und die die Abweichung der tatsächlichen Neigungseinstellung von einer vorgegebenen korrekten Neigungseinstellung anzeigt. Ist für den Scheinwerfereinsatz 10 nur eine Einstellmöglichkeit der Ausrichtung der optischen Achse 28 in der vertikalen Längsebene VV erforderlich, so braucht die Öffnung 52 in der Platte 50 nicht als Langloch ausgebildet zu sein, sondern ist in ihrem Durchmesser so ausgebildet, daß die Verstellschraube 54 mit geringem Spiel durch diese hindurchtritt.

Bei gelöstem Mutterteil 57 kann außerdem die Ausrichtung der optischen Achse 28 in der horizontalen Längsebene HH eingestellt werden, indem die Verstellschraube 54 im Langloch 52 in Richtung von dessen Längserstreckung verschoben wird. Dabei wird auch der Scheinwerfereinsatz 10 im Bereich seines Arms 42 in horizontaler Richtung bewegt und um seinen im Aufnahmeabschnitt 26 angeordneten vorderen Randbereich geschwenkt. Durch den in die Ausnehmung 72 eingreifenden Vorsprung 70 ist sichergestellt, daß sich der Scheinwerfereinsatz beim Schwenken nicht in unerwünschter Weise auch um die optische Achse 28 verdreht wird. Zur Kontrolle der Ausrichtung der optischen Achse 28 in der horizontalen Längsebene HH dient die Nase 46 des Arms 42, die durch die Öffnung 58 in der Platte 50 nach oben hindurchragt und mit der Skala 60 am Rand der Öffnung 58 zusammenwirkt. Die Skala 60 weist eine besonders hervorgehobene Skalenmarkierung 60a auf, auf die die Nase 46 bei korrekt eingestellter Ausrichtung der optischen Achse 28 zeigt, und mehrere weitere, eine Abweichung der Ausrichtung der optischen Achse 28 von der korrekten Ausrichtung anzeigende Skalenmarkierungen 60b.

Durch die vorstehend erläuterte Ausbildung des Scheinwerfers ist es ermöglicht die Einstellung der Ausrichtung der optischen Achse 28 von der Oberseite des Scheinwerfers her vorzunehmen. Außerdem ist mit der einzigen Verstellschraube 54 eine Einstellung der Ausrichtung der optischen Achse 28 des Scheinwerfereinsatzes 10 sowohl in der vertikalen Längsebene als auch in der horizontalen Längsebene ermöglicht. Beide Einstellungen sind dabei unabhängig voneinander möglich, das heißt bei einer Einstellung der Ausrichtung der optischen Achse 28 in der vertikalen Längsebene durch Verdrehung der Verstellschraübe 54 wird die Ausrichtung in der horizontalen Längsebene nicht verändert und umgekehrt wird bei einer Einstellung der Ausrichtung der optischen Achse 28 in der horizontalen Längsebene durch Verschieben der Verstellschraube 54 die Ausrichtung in der vertikalen Längsebene nicht verändert.

## Patentansprüche

1. Scheinwerfer für Fahrzeuge mit einem Scheinwerfereinsatz (10;110), der zumindest einen Reflektor (16) umfaßt und der an einer Aufnahme (12) schwenkbar gelagert ist und mit einer Verstellvorrichtung, die mit Abstand zur Lagerstelle des Scheinwerfereinsatzes (10;110) an diesem angreift und durch die der Scheinwerfereinsatz (10;110) zur Einstellung der Ausrichtung seiner optischen Achse (28) schwenkbar ist, dadurch gekennzeichnet, daß die Aufnahme (12) einen Abschnitt (26;126) aufweist, der den Scheinwerfereinsatz (10;110) zumindest auf einem Teil von dessen Umfang umgibt und daß der Scheinwerfereinsatz (10;110) im Aufnahmeabschnitt (26; 126) über mindestens ein zwischen dem Scheinwerfereinsatz (10;110) und dem Aufnahmeabschnitt (26; 126) eingespanntes elastisch verformbares Element (29;129) schwenkbar gelagert ist.

2. Scheinwerfer nach Anspruch 1, dadurch gekennzeichnet, daß der Scheinwerfereinsatz (10;110) mit seinem in Lichtaustrittsrichtung (20) weisenden vorderen Randbereich (22; 122) im Aufnahmeabschnitt (26; 126) angeordnet ist.

3. Scheinwerfer nach Anspruch 1 oder 2, dadurch gekennzeichnet, daß der Aufnahmeabschnitt (26) den Scheinwerfereinsatz (10) auf dessen gesamtem Umfang umgibt und daß das elastisch verformbare Element (29) als ein den Scheinwerfereinsatz (10) im Bereich des Aufnahmeabschnitts (26) auf dessen gesamtem Umfang umgebender Ring ausgebildet ist.

4. Scheinwerfer nach einem der vorstehenden Ansprüche, dadurch gekennzeichnet, daß der Aufnahmeabschnitt (26) etwa hohlzylinderförmig ausgebildet ist, wobei dessen Längserstreckung zumindest annähernd parallel zur optischen Achse (28) des Scheinwerfereinsatzes (10) verläuft und dessen Querschnittsform an die Querschnittsform des Scheinwerfereinsatzes (10) angepaßt ist.

5. Scheinwerfer nach Anspruch 1 oder 2, dadurch gekennzeichnet, daß der Aufnahmeabschnitt durch mehrere über den Umfang des Scheinwerfereinsatzes (110) verteilt angeordnete Stützen (126) gebildet ist, zwischen denen und dem Außenumfang des Scheinwerfereinsatzes (110) jeweils ein elastisch verformbares Element (129) eingespannt ist.

6. Scheinwerfer nach einem der vorstehenden Ansprüche, dadurch gekennzeichnet, daß der Scheinwerfereinsatz (10;110) zusätzlich zum Reflektor (16) eine in Lichtaustrittsrichtung (20) vom Reflektor (16) entfernt angeordnete Linse (23) aufweist, die in einem mit dem Reflektor (16) verbundenen Trägerteil (18;118) gehalten ist, wobei der Scheinwerfereinsatz (10;110) mit dem Trägerteil (18;118) im Aufnahmeabschnitt (26;126) angeordnet ist und das mindestens eine elastisch verformbare Element (29;129) zwischen dem Trägerteil (18;118) und dem Aufnahmeabschnitt (26;126) eingespannt ist.

7. Scheinwerfer nach einem der vorstehenden Ansprüche, dadurch gekennzeichnet, daß der Scheinwerfereinsatz (10;110) im Aufnahmeabschnitt (26;126) gegen Verdrehen um die optische Achse (28) gesichert ist.
